# EUROPÄISCHE PATENTSCHRIFT

(11) **EP 1 682 558 B1**
(45) Veröffentlichungstag und Bekanntmachung des Hinweises auf die Patenterteilung: **19.09.2007**
(21) Anmeldenummer: 04797830.9
(22) Anmeldetag: 11.11.2004
(51) Int. Cl.: C07F 7/18, C07F 7/08

(54) **VERFAHREN ZUR HERSTELLUNG VON AMINO-GRUPPEN TRAGENDEN SILICIUM-VERBINDUNGEN**
METHOD FOR THE PRODUCTION OF SILICON COMPOUNDS CARRYING AMINO GROUPS
PROCEDE POUR PRODUIRE DES COMPOSES SILICIUM PORTANT DES GROUPES AMINO

(30) Priorität: 13.11.2003 DE 10353063
(43) Veröffentlichungstag der Anmeldung: 26.07.2006
(73) Patentinhaber: Wacker Chemie AG, 81737 München (DE)
(72) Erfinder: KORNEK, Thomas, 84489 Burghausen (DE)
(74) Vertreter: Schuderer, Michael
(86) Internationale Anmeldenummer: PCT/EP2004/012805
(87) Internationale Veröffentlichungsnummer: WO 2005/047298

(56) Entgegenhaltungen:
- DE-A1- 1 812 564
- DE-A1- 10 139 132
- US-A- 4 555 561

## Beschreibung

Die Erfindung betrifft ein Verfahren zur Herstellung von (N-Organylaminoorganyl)- und (N,N-Diorganylaminoorganyl)triorganylsilanen aus entsprechenden (Triorganylsilylorganyl)halogeniden und N-Organyl- bzw. N,N-Diorganylaminen sowie (N-Cyclohexylaminomethyl)trimethoxysilan und [N,N-Bis-(N`,N`-dimethylaminopropyl)aminomethyl]triorganylsilan erhältlich mittels dieses Verfahrens.

(N-Organylaminoorganyl)- und (N,N-Diorganylaminoorganyl)triorganylsilane können derzeit mittels drei unterschiedlicher Verfahren hergestellt werden.

Aminoalkyl-substituierte Siliciumverbindungen mit einer mindestens drei C-Atome enthaltenden Alkylenbrücke zwischen dem Stickstoff- und dem Siliciumatom werden durch Hydrosilylierung entsprechender ungesättigter Aminverbindungen mit Organosiliciumverbindungen enthaltend an das Siliciumatom gebundene Wasserstoffatome erhalten. Gegebenenfalls enthaltene freie NH-Gruppen an der Amin-haltigen Olefin-Komponente müssen vor der Hydrosilylierungsreaktion durch Schutzgruppen blockiert werden, um unerwünschte Nebenreaktionen zu vermeiden.

Weiterhin können (Aminoorganyl)silane durch nukleophile Substitutionsreaktionen mit Hilfe von Organylhalogeniden in substituierte (N-Organylaminoorganyl)- und (N,N-Diorganylaminoorganyl)triorganylsilane überführt werden. Nachteilhaft bei diesem Verfahren ist die Neigung der Organylhalogenide zu unkontrollierten Mehrfachalkylierungen.

Das Verfahren zur Herstellung von (N-Organylaminoorganyl)- und (N,N-Diorganylaminoorganyl)triorganylsilanen mittels der Umsetzung von (Halogenorganyl)silanen mit entsprechenden Aminen ist wirtschaftlich günstiger als die beiden zuvor genannten Verfahren. Vorteilhaft erweist sich vor allem die günstige Verfügbarkeit von (Chloralkyl)silanen, die mittels Photochlorierung von Alkylsilanen oder Hydrosilylierung von entsprechenden Halogen-substituierten Olefinen an Si-H-haltige Verbindungen erhältlich sind und beispielsweise als Zwischenprodukte für die Synthese einer Vielzahl von organofunktionellen Silanen Verwendung finden. Weiterhin kann bei dieser Vorgehensweise auf eine große Zahl ähnlich gut verfügbarer primärer und sekundärer Amine zum Aufbau der (N-Organylaminoorganyl)- und (N,N-Diorganylaminoorganyl)triorganylsilane zurückgegriffen werden, was einen sehr weiten Anwendungsbereich des Verfahrens und dadurch kostengünstige Produktwechsel auf bestehenden technischen Fertigungsanlagen ermöglicht.

Die großbritannische Patentschrift GB 686,068 A beansprucht (Amino-), (N-Organylamino,-) und (N,N-Diorganylaminomethyl)- oder (N,N-Diorganylaminoethyl)triorganylsilane. Weiterhin beschreibt GB 686,068 A ein Verfahren zur Umsetzung von entsprechenden (Chlormethyl)- oder (Brommethyl)triorganosilanen mit Ammoniak, einem primären oder sekundären Amin bei Temperaturen von mindestens 50°C zur Herstellung besagter (Aminoorganyl)-, (N-Organylaminoorganyl)- und (N,N-Diorganylaminoorganyl)triorganylsilane. Dabei wurden in der Regel die (Chlormethyl)- oder (Brommethyl)triorganosilane in einem Kolben oder Autoklaven, abhängig von den Siedepunkten der eingesetzten Amin-Verbindungen, vorgelegt und auf Temperaturen über 100°C, vorzugsweise 110 - 130°C erwärmt. Im Falle höher siedender Amine (z. B. Cyclohexylamin) wurde die Mischungsreihenfolge umgekehrt und die (Chlormethyl)- oder (Brommethyl)triorganosilane zum erwärmten Amin zugegeben. Die Reaktionszeit betrug in Abhängigkeit der umzusetzenden Amin-Verbindung 2 bis 8 Stunden.

Die (Aminomethyl)silanderivate werden nach dem in der deutschen Offenlegungsschrift DE 18 12 564 A1 beschriebenen Verfahren durch Umsetzung eines (Chlormethyl)- oder (Brommethyl)silanderivats mit Ammoniak oder einem primären Amin hergestellt. Die Umsetzung erfolgt bei Temperaturen von 80 oder 100°C in einem Zeitraum von 3 bzw. 2 Stunden, wobei das Amin im molaren Überschuss von 1 : 3,2 - 6 bereits zu Beginn der Reaktion vollständig vorgelegt wurde.

Die in GB 686,068 A und DE 18 12 564 A1 beschriebenen Verfahren weisen sehr lange Reaktionszeiten von mehreren Stunden auf. Die erhaltenen Ausbeuten sind gering. Die Produkte werden nicht in der benötigten Reinheit erhalten und müssen vor ihrer weiteren Verwendung aufwendig aufgereinigt werden. Beispielsweise enthalten die gemäß des beschriebenen Verfahrens erhaltenen Produkte große Mengen an ionogenem Chlorid oder Bromid. Dies schränkt deren technische Verwendung ohne Aufreinigung, beispielsweise in Dichtmassen, die auf metallischen Oberflächen aufgebracht werden, u.a. durch Förderung der Korrosionsbildung stark ein.

Als Chlorid- oder Bromid-haltige Verunreinigungen treten hierbei vor allem die Hydrochloride oder -bromide der bei der Synthese eingesetzten Amine oder auch die Hydrochloride oder - bromide der Zielverbindungen auf. In diesem Zusammenhang wurde überraschenderweise gefunden, dass Mischungen von (Aminomethyl)silanen und den zuvor genannten Hydrochloriden oder -bromiden bei höheren Temperaturen, wie sie beispielsweise während der Herstellung und auch zur destillativen Aufreinigung der Zielverbindungen notwendig sind, zur teilweise sehr exothermen Zersetzung der Zielverbindungen unter Bruch der Si-C-Bindung und Bildung entsprechend N-methylierter Amine führen können. Die so gebildeten N-Methylamine beeinflussen in unerwünschter Weise den Verfahrensverlauf. Dieser Effekt scheint mit der Basizität der Amin-Verbindung zu korrelieren: Je weniger basisch das (Aminomethyl)silan ist, umso leichter tritt diese Zersetzungsreaktion ein. Aus diesem Grunde sind auch aus sicherheitstechnischer Sicht niedrige Halogenid-Gehalte der hier beschriebenen (Aminomethyl)silane notwendig. Zwar sind eine Reihe von Verfahren zur Reduktion von Halogenid-Gehalten in Alkoxysilanen bekannt, die beispielsweise auf der Ausfällung des gelösten Halogenids durch Zugabe von Alkali- oder Erdalkali-Alkoholat-Salzen beruhen (z. B. EP 0 702 017 A1, DE 693 06 288 T2, DE 195 13 976 A1), doch sind hierbei zur einfachen und effizienten Verringerung des Halogenid-Gehalts überstöchiometrische Mengen der Salze notwendig, da durch stöchiometrische Mengen nicht die gewünschte vollständige Halogenid-Entfernung erzielt werden kann. Ungünstigerweise neigen jedoch alle bislang untersuchten (Aminomethyl)silane unter diesen Bedingungen, wie die gleichzeitige Gegenwart freier Alkohole und starker Basen, zu Zersetzungsreaktionen, wie beispielsweise auch zum bereits oben beschriebenen Bruch der Si-C-Bindung. Ein alternatives Verfahren, das Reduktionen von Chlorid-Gehalten in Alkoxy-Silanen durch Einleiten von Ammoniak ermöglichen soll, ist in der deutschen Offenlegungsschrift DE 199 41 283 A1 beschrieben, doch sind hierbei (Aminoalkyl)alkoxysilane explizit von deren Anwendungsbereich ausgeschlossen.

Weiterhin ist die in DE 18 12 564 A1 beschriebene Aufheizung der vollständig vorgemischten Lösung von Silan und Amin auf Grund der exothermen Reaktion der beiden Komponenten aus anlagensicherheitstechnischer Sicht bedenklich.

Das US-Patent US 4,55,561 offenbart ebenfalls Aminosilane wie beispielsweise N-(aminoethyl)aminomethyltrimethoxysilan in Poylurethan-Harz-Zusammensetzungen zu Herstellung von Polyurethanen.

Völlig überraschend wurde gefunden, dass die weiter oben genannte Zersetzung von (Aminomethyl)silanen nicht nur in Gegenwart von Hydrochloriden oder Alkoholen und Basen stattfindet, sondern insbesondere auch bereits die alleinige Anwesenheit von Alkoholen ausreichend sein kann, um die Bildung entsprechender N-Methylamine hervorzurufen. Die so gebildeten N-methylierten Amin-Derivate konkurrieren während der Umsetzung mit noch vorhandenem nicht methylierten Amin um die Reaktion mit dem (Halogenmethyl)silan und führen schließlich zur Bildung von (N-Methylaminomethyl)silanen, die destillativ nicht mehr von den Zielverbindungen abgetrennt werden können. Zur Vermeidung dieser unerwünschten Nebenreaktion muss daher in der Reaktionsmischung auf die Abwesenheit von Alkoholen geachtet werden. Ist mindestens einer der Organyl-Reste am Silicium-Atom eine Alkoxygruppe, können nur wasserarme Amine in dem Verfahren zum Einsatz kommen, da ansonsten durch vorgelagerte Reaktion des Silans mit im Amin vorhandenen Wasser Alkohole freigesetzt werden.

Es bestand daher die Aufgabe, die bestehenden Nachteile der Verfahren zur Herstellung von (N-Organylaminoorganyl)- und (N,N-Diorganylaminoorganyl)triorganylsilanen gemäß des Stands der Technik zu beheben und ein einfaches Verfahren zur Verfügung zu stellen, das (N-Organylaminoorganyl)- und (N,N-Diorganylaminoorganyl)triorganylsilane mit kurzen Reaktionszeiten in hohen Ausbeuten und hohen Reinheiten zugänglich macht.

Die Aufgabe konnte überraschenderweise durch ein Verfahren gemäß Anspruch 1 gelöst werden.

Weiterhin konnten die Halogenid-Gehalte in den Zielverbindungen dadurch reduziert werden, dass unpolare Lösungsmittel den Rohmischungen hinzugegeben und die ausgefallenen Salze abgetrennt wurden. Durch Einsatz wasserarmer Amine wurde die Freisetzung von Alkoholen während der Synthese und damit die Bildung der genannten Nebenprodukte unterbunden. Überraschenderweise konnte bei Bedarf durch Umsalzung mit Ammoniak das während des Verfahrens gebildete Amin- bzw. (Aminomethyl)silan-Hydrohalogenid aus der Mischung entfernt werden, was weiterhin die Bildung der N-methylierten Nebenprodukte verhinderte. Obwohl die Lehre der Offenlegungsschrift DE 199 41 283 A1 dies explizit ausnimmt, konnten überraschenderweise durch Einleiten von Ammoniak in das Roh- oder isolierte Endprodukt vorzugsweise chloridfreie (Aminomethyl)silane erhalten werden.

Gegenstand der Erfindung ist daher ein Verfahren zur Herstellung von (N-Organylaminoorganyl)- und (N,N-Diorganylaminoorganyl)triorganylsilanen der allgemeinen Formel (1)

R₃₋ₙR¹ₙSi-R²-NR³R⁴ (1)

durch Umsetzung von wasserarmen, cyclischen oder acyclischen Aminen der allgemeinen Formel (2)

H-NR³R⁴, (2)

deren Wassergehalt zwischen 0 und 20000 ppm liegt,
mit (Halogenorganyl) silanen der allgemeinen Formel (3)

R₃-ₙR¹ₙSi-R²-X (3)

wobei
- **R**: ein Kohlenwasserstoff- oder ein Alkoxyrest mit 1-10 C-Atomen, der gesättigt oder ungesättigt, verzweigt oder unverzweigt, substituiert oder unsubstituiert sein kann, bedeutet,
- **R¹**: ein Kohlenwasserstoffrest mit 1-10 C-Atomen, der gesättigt oder ungesättigt, verzweigt oder unverzweigt, substituiert oder unsubstituiert sein kann, bedeutet
- **R²**: ein Kohlenwasserstoffrest mit 1-10 C-Atomen, der gesättigt oder ungesättigt, verzweigt oder unverzweigt, substituiert oder unsubstituiert sein kann, bedeutet,
- **R³,R⁴**: Wasserstoff oder einen Kohlenwasserstoffrest mit 1-10 C-Atomen, der gesättigt oder ungesättigt, verzweigt oder unverzweigt, substituiert oder unsubstituiert sein kann, bedeuten, mit der Maßgabe, dass **R³,R⁴** gleich oder verschieden sein können und **gegebenenfalls** miteinander verbunden sind, wobei der resultierende Cyclus auch Heteroatome enthalten kann,
- **X**: Chlor, Brom oder Iod bedeutet
- n: eine Zahl gleich 1, 2 oder 3 bedeutet
**dadurch gekennzeichnet, dass** das Verfahren die Schritte
a) kontinuierliche Zugabe des (Halogenorganyl)silans der allgemeinen Formel (3) in einem Zeitraum von 1 bis maximal 3 Stunden bei einer Temperatur von 80 bis 200°C zu einem 3- bis 6-fachen Überschuss des Amins der allgemeinen Formel (2), welches zuvor im Reaktionsraum vorgelegt und auf die Reaktionstemperatur erhitzt wurde,
b) **gegebenenfalls** Umsalzung der gebildeten Hydrohalogenide durch Einleiten von Ammoniak während oder nach der Zugabe des (Halogenorganyl)silans,
c) **gegebenenfalls** Abtrennung der entstandenen Ammoniumsalze nach beendeter Zugabe
d) Entfernung des überschüssigen Amins nach beendeter Zugabe,
e) **gegebenenfalls** Zugabe eines unpolaren Lösemittels zur Ausfällung noch gelöster Ammonium-Verbindungen mit anschließender Entfernung der entstandenen Ammonium-Salze,
f) **gegebenenfalls** Zugabe von Ammoniak zur Ausfällung noch gelöster Hydrohalogenide mit anschließender Entfernung der entstandenen Ammonium-Salze und
g) **gegebenenfalls** Destillation des Produktes
umfasst und das kontinuierlich oder diskontinuierlich betrieben werden kann.

Die Reste R¹, R³ und R⁴ sind unabhängig voneinander Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest; sowie durch Heteroatome wie N, O, S, P verknüpfte Kombinationen hiervon. Bevorzugt ist maximal einer der Reste R³ oder R⁴ Wasserstoff. Weiterhin können die Reste R³ und R⁴ direkt oder durch Heteroatome verbunden sein, so dass sich unter struktureller Einbeziehung des N-Atoms zyklische Strukturen - NR³R⁹ ergeben. Beispiele hierfür sind der Morpholino-, Piperidino- oder Pyrrolidino-Rest, die auch bevorzugt sind. Darüber hinaus ist der Rest NR³R⁴ bevorzugt der N,N-Bis-(N`,N`-dimethylaminopropyl)-Rest.

Vorzugsweise ist R¹ der Methyl-, Ethyl-, iso- und n-Propyl-, iso- und n-Butyl-, Pentyl-, Hexyl-, Heptyl-, Octyl-, Nonyl-, Decyl-, Phenyl-, Benzyl- oder Allyl-Rest. Die Reste R³ und R⁴ sind vorzugsweise wie R¹ sowie weiterhin Cylclohexyl- oder Phenyl-Reste. In einer besonders bevorzugten Ausführungsform ist der Rest R³ der Phenyl- oder Cyclohexylrest und der Rest R⁴ Wasserstoff.

Der Rest R hat die Bedeutung von R¹ oder OR¹. Vorzugsweise ist R der Methoxy-, Ethoxy-, iso- und n-Propoxy-, Butoxy-, Phenoxy-, Benzyloxy- oder Allyloxy-Rest.

Bei dem Rest R² handelt es sich bevorzugt um eine Methylen-, Ethylen- und Propylen-Gruppe, besonders bevorzugt um die Methylen-Gruppe.

Der Rest X hat die Bedeutung Chlor, Brom oder Iod, bevorzugt Chlor oder Brom, besonders bevorzugt Chlor. n hat den Wert 0, 1, 2 oder 3, bevorzugt 1, 2 oder 3.

Vorzugsweise beträgt der Wassergehalt der einzusetzenden Amine der allgemeinen Formel (2) 0 bis 20000 ppm, bevorzugt 0 bis 5000 ppm, besonders bevorzugt 0 bis 1000 ppm.

Mit dem erfindungsgemäßen Verfahren konnten in einfacher Weise (N-Organylaminoorganyl)- und (N,N-Diorganylaminoorganyl)-triorganylsilane aus entsprechenden (Triorganylsilylorganyl)-halogeniden und N-Organyl- bzw. N,N-Diorganylaminen in quantitativer Ausbeute erhalten werden.

Die Reinheit der (N-Organylaminoorganyl)- und (N,N-Diorganylaminoorganyl)-triorganylsilane beträgt mindestens 85%. Diese Reinheit lässt sich mittels einfacher Destillation auf über 95% steigern.

Das erfindungsgemäße Verfahren bietet gegenüber dem Stand der Technik insbesondere die Vorteile, dass die Reaktionszeiten durch die geeignete Wahl des Reaktionsparameters Prozesstemperatur überraschenderweise deutlich auf maximal 1 bis 2 Stunden bei vollständigem Reaktionsumsatz verkürzt werden konnten. Gleichzeitig wird durch den Einsatz optimierter Überschüsse an Amin gemäß der allgemeinen Formel (2) sowie gegebenenfalls durch die Maßnahmen zur Reduktion des Gehalts an (Aminomethyl)silan-Hydrohalogeniden während der Synthese durch Umsalzung der entstandenen Amin- bzw. (Aminomethyl)silan-Hydrohalogenide in Ammoniumhalogenide mittels Ammoniak und durch die Verwendung wasserarmer Amine in der Mischung die Bildung von Nebenprodukten signifikant reduziert.

Die Zugabe unpolarer, leicht recycelbarer organischer Lösemittel vor dem Abfiltrieren der während der Reaktion gebildeten Ammoniumsalze erweist sich überraschenderweise als sehr geeignet, den Gehalt an ionogenem Chlorid, Bromid oder Iodid im Produkt zu reduzieren bis gänzlich zu beseitigen. Diese bevorzugte Ausführungsform führt weiterhin in einer gegebenenfalls anschließenden Destillation der Produkte zu höheren Ausbeute des aufgereinigten Produkts. Weiterhin wird die Verschleppung von sublimierbaren Ammoniumsalzen in die Destillationsanlage vermieden. Sollten die genannten Maßnahmen im Einzelfall keine vollständige Entfernung an ionogenem Chlorid, Bromid oder Iodid im Produkt ergeben, so lässt sich dieses Ziel durch Zugabe von Ammoniak und anschließender Entfernung des gegebenenfalls ausgefallenen Niederschlags erreichen.

Ein weiterer Gegenstand der Erfindung ist (N-Cyclohexylaminomethyl)trimethoxysilan. (N-Cyclohexylaminomethyl) trimethoxysilan (Summenformel C₁₀H₂₃NO₃Si, Molmasse 233,38 g/mol) wurde gemäß des erfindungsgemäßen Verfahrens durch Umsetzung von (Chlormethyl)trimethoxysilan mit Cyclohexylamin als farblose Flüssigkeit von alkoholischem Geruch erhalten.

Ein weiterer Gegenstand der Erfindung sind [N,N-Bis-(N`,N`-dimethylaminopropyl)aminomethyl]triorganylsilane der allgemeinen Formel (4)

[(CH₃)₂N-CH₂-CH₂-CH₂]2N-CH₂-Si (OR⁵)ₙ(CH₃)₃₋ₙ (4)

wobei
- **n**: eine ganze Zahl von 1, 2 oder 3 und
- **R⁵**: den Rest -CH₂-CH₃ oder -CH₃
bedeuten.

Somit sind [N,N-Bis-(N`,N`-dimethylaminopropyl)aminomethyl]triethoxysilan, [N,N-Bis-(N`,N`-dimethylaminopropyl)aminomethyl]diethoxy(methyl)silan, [N,N-Bis-(N`,N`-dimethylaminopropyl)aminomethyl]ethoxydimethylsilan, [N,N-Bis-(N`,N`-dimethylaminopropyl)aminomethyl]trimethoxysilan, [N,N-Bis-(N`,N`-dimethylaminopropyl)aminomethyl]dimethoxy(methyl)silan und [N,N-Bis-(N`,N`-dimethylaminopropyl)aminomethyl]methoxydimethylsilan Gegenstand der Erfindung, die gemäß des erfindungsgemäßen Verfahrens durch Umsetzung der in Tabelle 1 genannten Silane mit N,N-Bis-(N`,N`-dimethylaminopropyl)amin als farblose Flüssigkeiten mit alkoholischem Geruch erhalten wurden.

**Tabelle 1 (Abkürzungen: Me = CH₃; Et = CH₂CH₃)**

| Silan | Produkt | Summenformel | Molmasse |
|---|---|---|---|
| (EtO)₃Si(CH₂Cl) | [N,N-Bis-(N`,N`-dimethylaminopropyl)aminomethyl]triethoxysilan | C₁₇H₄₁SiN₃O₃ | 363,62 |
| Me(EtO)₂Si(CH₂Cl) | [N,N-Bis-(N`,N`-dimethylaminopropyl)aminomethyl]diethoxy-(methyl)silan | C₁₆H₃₉SiN₃O₂ | 333, 59 |
| Me₂(EtO)Si(CH₂Cl) | [N,N-Bis-(N`,N`-dimethylaminopropyl)aminomethyl]ethoxydimethylsilan | C₁₅H₃₇SiN₃O | 303, 57 |
| (MeO)₃Si(CH₂Cl) | [N`,N`-Bis-(N`,N`-dimethylaminopropyl)aminomethyl]trimethoxysilan | C₁₄H₃₅SiN₃O₃ | 321,54 |
| Me(MeO)₂Si(CH₂Cl) | [N`,N`-Bis-(N`,N`-dimethylaminopropyl)aminomethyl]dimethoxy-(methyl)silan | C₁₄H₃₅SiN₃O₂ | 305,54 |
| Me₂(MeO)Si(CH₂Cl) | [N`,N`-Bis-(N`,N`-dimethylaminopropyl)aminomethyl]methoxydimethylsilan | C₁₄H₃₅SiN₃O | 289,54 |

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke auf 0,10 MPa (abs.).

### Beispiel 1 (nicht erfindungsgemäß)

In einem 500ml-Dreihalskolben mit Rückflusskühler, KPG-Rührer und Thermometer wurden 176 g handelsübliches Cyclohexylamin (Wassergehalt ≤ 2%) auf 100°C erhitzt und innerhalb von 30 min unter Rühren mit 122 g (Chlormethyl)ethoxydimethylsilan versetzt. Nach Beendigung der Zugabe rührte man die Mischung zwei Stunden unter Rückfluss, kühlte sie auf 30°C ab, filtrierte den entstandenen weißen Niederschlag über eine Drucknutsche und wusch mit Cyclohexylamin nach. Filtrat und Waschlösungen wurden vereinigt und unter vermindertem Druck von überschüssigem Cyclohexylamin befreit. Die anschließende fraktionierte Destillation ergab 105 g (Ausbeute 61%) (N-Cyclohexylaminomethyl)ethoxydimethylsilan mit einem Chlorid-Gehalt von 600 ppm.

### Beispiel 2

In einem 500ml-Dreihalskolben mit Rückflusskühler, KPG-Rührer und Thermometer wurden 317 g trockenes Cyclohexylamin auf 130°C erhitzt und innerhalb von 45 min unter Rühren mit 122 g (Chlormethyl)ethoxydimethylsilan versetzt. Nach Beendigung der Zugabe rührte man 30 min bei 130°C weiter und destillierte überschüssiges Cyclohexylamin unter vermindertem Druck ab. Daraufhin wurde die Mischung auf 30°C abgekühlt und mit 150 ml iso-Hexan versetzt. Anschließend filtrierte man die Suspension über eine Druckfilternutsche und wusch den Niederschlag mit zweimal 80 ml iso-Hexan nach. Filtrat und Waschlösungen wurden vereinigt und unter vermindertem Druck vom Lösemittel befreit. Die anschließende fraktionierte Destillation ergab 163 g (Ausbeute 95%) (N-Cyclohexylaminomethyl)ethoxydimethylsilan mit einem Chlorid-Gehalt von < 20 ppm. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

### Beispiel 3

Beispiel 2 wurde mit der Änderung wiederholt, dass anstelle von 122 g (Chlormethyl)ethoxydimethylsilan 137 g (Chlormethyl)trimethoxysilan eingesetzt wurden. Im Zuge der fraktionierten Destillation wurden 176 g (Ausbeute 94%) (N-Cyclohexylaminomethyl)trimethoxysilan mit einem Chlorid-Gehalt von < 20 ppm erhalten. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

### Beispiel 4

In einem 500ml-Vierhalskolben mit Rückflusskühler, KPG-Rührer, Thermometer und Gaseinleitungsrohr wurden 298 g trockenes Anilin auf 130°C erhitzt und innerhalb von 60 min unter Rühren mit 124 g (Chlormethyl)methyldimethoxysilan versetzt. Nach Beendigung der Zugabe leitete man bei gleichbleibender Temperatur solange unter Rühren Ammoniak durch die Mischung, bis keine weitere Umsetzung mehr zu beobachten war (ca. 60 min). Daraufhin wurde überschüssiges Anilin unter vermindertem Druck entfernt, die Suspension auf 30°C abgekühlt und sodann mit 150 ml iso-Hexan versetzt. Anschließend filtrierte man den entstandenen weißen Niederschlag über eine Drucknutsche und wusch mit zweimal 80 ml iso-Hexan nach. Filtrat und Waschlösungen wurden vereinigt und unter vermindertem Druck vom Lösemittel befreit. Die anschließende fraktionierte Destillation ergab 160 g (Ausbeute 95%) (N-Phenylaminomethyl)dimethoxy(methyl)silan mit einem Chlorid-Gehalt von < 20 ppm. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

### Beispiel 5

Beispiel 4 wurde mit der Abänderung wiederholt, dass anstelle von 124 g (Chlormethyl)methyldimethoxysilan 137 g (Chlormethyl)trimethoxysilan eingesetzt wurden. Nach destillativer Aufarbeitung erhielt man (N-Phenylaminomethyl)trimethoxysilan in einer Ausbeute von 94% und einem Chlorid-Gehalt von < 20 ppm. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

### Beispiel 6

Beispiel 4 wurde mit der Abänderung wiederholt, dass Ammoniak und Silan gleichzeitig zu Anilin zudosiert und die Mischung anschließend noch 30 min in Ammoniak-Atmosphäre bei der angegebenen Temperatur gerührt wurde. Die Aufarbeitung erfolgte analog Beispiel 4 und lieferte 162 g (Ausbeute 96%) (N-Phenylaminomethyl)dimethoxy(methyl)silan mit einem Chlorid-Gehalt von < 20 ppm. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

### Beispiel 7

Beispiel 2 wurde mit der Abänderung wiederholt, dass anstelle von 122 g (Chlormethyl)ethoxydimethylsilan 170 g (Chlormethyl)triethoxysilan eingesetzt wurden. Im Zuge der fraktionierten Destillation wurden 207 g (Ausbeute 94%) (N-Cyclohexylaminomethyl)triethoxysilan mit einem Chlorid-Gehalt von < 20 ppm erhalten. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

### Beispiel 8

Beispiel 2 wurde mit der Abänderung wiederholt, dass anstelle von 122 g (Chlormethyl)ethoxydimethylsilan 146 g (Chlormethyl)diethoxy(methyl)silan eingesetzt wurden. Im Zuge der fraktionierten Destillation wurden 186 g (Ausbeute 95%) (N-Cyclohexylaminomethyl)diethoxy(methyl)silan mit einem Chlorid-Gehalt von < 20 ppm erhalten. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

### Beispiel 9

Beispiel 7 wurde mit der Abänderung wiederholt, dass anstelle von 317 g trockenen Cyclohexylamins 279 g trockenen Morpholins eingesetzt wurden. Im Zuge der fraktionierten Destillation wurden 204 g (Ausbeute 97%) (N-Morpholinomethyl)triethoxysilan mit einem Chlorid-Gehalt von < 20 ppm erhalten. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

### Beispiel 10

Beispiel 8 wurde mit der Abänderung wiederholt, dass anstelle von 317 g trockenen Cyclohexylamins 599 g trockenen N,N-Bis-(N`,N`-dimethylaminopropyl)amins eingesetzt wurden. Im Zuge der fraktionierten Destillation wurden 237 g (Ausbeute 89%) [N,N-Bis-(N`,N`-dimethylaminopropyl)aminomethyl]diethoxy(methyl)silan mit einem Chlorid-Gehalt von < 50 ppm erhalten. Gab man vor der Destillation des Produkts 1% Ammoniak hinzu und filtrierte gegebenenfalls ausgefallenen Niederschlag ab, so erhielt man bei gleicher Ausbeute ein Produkt mit einem Chlorid-Gehalt von < 10 ppm.

## Patentansprüche

1. Verfahren zur Herstellung von (N-Organylaminoorganyl)- und (N,N-Diorganylaminoorganyl)-triorganylsilanen der allgemeinen Formel (1)
R₃₋ₙR¹ₙSi-R²-NR³R⁴ (1)
durch Umsetzung von cyclischen oder acyclischen Aminen der allgemeinen Formel (2)
H-NR³R⁴, (2)
deren Wassergehalt zwischen 0 und 20000 ppm liegt,
mit Halogenorganylsilanen der allgemeinen Formel (3)
R₃₋ₙR¹ₙSi-R²-X (3)
wobei
**R** ein Kohlenwasserstoff- oder ein Alkoxyrest mit 1-10 C-Atomen, der gesättigt oder ungesättigt, verzweigt oder unverzweigt, substituiert oder unsubstituiert sein kann, bedeutet,
**R¹** ein Kohlenwasserstoffrest mit 1-10 C-Atomen, der gesättigt oder ungesättigt, verzweigt oder unverzweigt, substituiert oder unsubstituiert sein kann, bedeutet,
**R²** ein Kohlenwasserstoffrest mit 1-10 C-Atomen, der gesättigt oder ungesättigt, verzweigt oder unverzweigt, substituiert oder unsubstituiert sein kann, bedeutet,
**R³,R⁴** Wasserstoff oder einen Kohlenwasserstoffrest mit 1-10 C-Atomen, der gesättigt oder ungesättigt, verzweigt oder unverzweigt, substituiert oder unsubstituiert sein kann, bedeuten, mit der Maßgabe, dass **R³,R⁴** gleich oder verschieden sein können und gegebenenfalls miteinander verbunden sind, wobei der resultierende Cyclus auch Heteroatome enthalten kann,
**x** Chlor, Brom oder Iod bedeutet,
**n** eine Zahl gleich 1, 2 oder 3 bedeutet,
**dadurch gekennzeichnet, dass** das Verfahren die Schritte
a) kontinuierliche Zugabe des (Halogenorganyl)silans der allgemeinen Formel (3) in einem Zeitraum von 1 bis maximal 3 Stunden bei einer Temperatur von 80 bis 200°C zu einem 3- bis 6-fachen Überschuss des Amins der allgemeinen Formel (2), welches zuvor im Reaktionsraum vorgelegt und auf die Reaktionstemperatur erhitzt wurde,
d) Entfernung des überschüssigen Amins nach beendeter Zugabe,
umfasst.

2. Verfahren nach Anspruch 1, **dadurch gekennzeichnet, dass** das Verfahren zusätzlich den sich an Schritt d) anschließenden Schritt
e) Zugabe eines unpolaren Lösemittels zur Ausfällung noch gelöster Ammonium-Verbindungen mit anschließender Entfernung der entstandenen Ammonium-Salze umfasst.

3. Verfahren nach Anspruch 1 oder 2, **dadurch gekennzeichnet, dass** das Verfahren zusätzlich zwischen den Schritten a) und d) die Schritte
b) Umsalzung der gebildeten Hydrohalogenide durch Einleiten von Ammoniak während oder nach der Zugabe des (Halogenorganyl)silans und
c) Abtrennung der entstandenen Ammoniumsalze nach beendeter Zugabe
umfasst.

4. Verfahren nach Anspruch 1 bis 3, **dadurch gekennzeichnet, dass** das Verfahren als weiteren Schritt
f) Zugabe von Ammoniak zur Ausfällung noch gelöster Hydrohalogenide mit anschließender Entfernung der entstandenen Ammonium-Salze
umfasst.

5. Verfahren nach Anspruch 1 bis 4, **dadurch gekennzeichnet, dass** das Verfahren als weiteren Schritt
g) Destillation des Produkts
umfasst.

6. Verfahren nach Anspruch 1 bis 5, **dadurch gekennzeichnet, dass** der Wassergehalt der einzusetzenden Amine der allgemeinen Formel (2) 0 bis 20000 ppm beträgt.

7. Verfahren nach Anspruch 1 bis 6, **dadurch gekennzeichnet, dass** der Wassergehalt der einzusetzenden Amine der allgemeinen Formel (2) 1000 ppm nicht überschreitet.

8. Verfahren nach Anspruch 2 bis 7, **dadurch gekennzeichnet, dass** im Schritt d) unpolare, leicht recyclebare organische Lösemittel verwendet werden.

9. Verfahren nach Anspruch 1 bis 8, **dadurch gekennzeichnet, dass** die Reste R³ und R⁴ unabhängig voneinander ausgewählt werden aus der Gruppe enthaltend Cyclohexyl, Phenyl und Wasserstoff oder direkt oder durch Heteroatome verbunden sind, so dass sich unter struktureller Einbeziehung des N-Atoms zyklische Strukturen -NR³R⁴ ergeben.

10. Verfahren nach Anspruch 9, **dadurch gekennzeichnet, dass** die zyklische Struktur -NR³R⁴ einen Morpholino-, Piperidino- oder Pyrrolidinorest bedeutet.

11. [N,N-Bis-(N`,N`-dimethylaminopropyl)aminomethyl]triorganylsilane der allgemeinen Formel (4)
[(CH₃)₂N-CH₂-CH₂-CH₂]₂N-CH₂-Si(OR⁵)ₙ(CH₃)₃₋ₙ (4)
wobei
**n** eine ganze Zahl von 1, 2 oder 3 und
**R⁵** den Rest -CH₂-CH₃ oder -CH₃
bedeuten.

## Claims

1. Method for the production of (N-organylaminoorganyl)- and (N,N-diorganylaminoorganyl)triorganylsilanes of the general formula (1)
R₃₋ₙR¹ₙSi-R²-NR³R⁴ (1)
by reacting cyclic or acyclic amines of the general formula (2)
H-NR³R⁴, (2)
whose water content is from 0 to 20 000 ppm,
with (haloorganyl)silanes of the general formula (3)
R₃₋ₙR¹ₙSi-R²-X (3)
in which
**R** is a hydrocarbon or an alkoxy radical having 1-10 C atoms which may be saturated or unsaturated, branched or straight-chain, substituted or unsubstituted,
**R¹** is a hydrocarbon radical having 1-10 C atoms, which may be saturated or unsaturated, branched or straight-chain, substituted or unsubstituted,
**R²** is a hydrocarbon radical having 1-10 C atoms, which may be saturated or unsaturated, branched or straight-chain, substituted or unsubstituted,
**R³,R⁴** are hydrogen or a hydrocarbon radical having 1-10 C atoms, which may be saturated or unsaturated, branched or straight-chain, substituted or unsubstituted, with the proviso that **R³,R⁴** may be identical or different and are optionally linked to one another, it also being possible for the resulting cycle to contain heteroatoms,
**X** is chlorine, bromine or iodine and
n is a number equal to 1, 2 or 3,
**characterized in that** the method comprises the steps
a) continuous addition of the (haloorganyl)silane of the general formula (3) in a period of from 1 to not more than 3 hours at a temperature of from 80 to 200°C to a 3- to 6-fold excess of the amine of the general formula (2), which was initially introduced beforehand in the reaction space and heated to the reaction temperature,
d) removal of the excess amine after the end of the addition.

2. Method according to Claim 1, **characterized in that** the method additionally comprises the step following step d)
e) addition of a nonpolar solvent for precipitation of still dissolved ammonium compounds with subsequent removal of the ammonium salts formed.

3. Method according to Claim 1 or 2, **characterized in that** the method additionally comprises, between the steps a) and d), the steps
b) double decomposition of the resulting hydrohalides by introduction of ammonia during or after the addition of the (haloorganyl)silane and
c) removal of the resulting ammonium salts after the end of the addition.

4. Method according to any of Claims 1 to 3, **characterized in that** the method comprises, as a further step,
f) addition of ammonia for precipitation of still dissolved hydrohalides with subsequent removal of the resulting ammonium salts.

5. Method according to any of Claims 1 to 4, **characterized in that** the method comprises, as a further step,
g) distillation of the product.

6. Method according to any of Claims 1 to 5, **characterized in that** the water content of the amines of the general formula (2) which are to be used is from 0 to 20 000 ppm.

7. Method according to any of Claims 1 to 6, **characterized in that** the water content of the amines of the general formula (2) which are to be used does not exceed 1000 ppm.

8. Method according to any of Claims 2 to 7, **characterized in that** nonpolar, readily recyclable organic solvents are used in step d).

9. Method according to any of Claims 1 to 8, **characterized in that** the radicals R³ and R⁴ are selected independently of one another from the group consisting of cyclohexyl, phenyl and hydrogen or are linked directly or by heteroatoms, resulting in cyclic structures -NR³R⁴ with structural inclusion of the N atom.

10. Method according to Claim 9, **characterized in that** the cyclic structure -NR³R⁴ is a morpholino, piperidino or pyrrolidino radical.

11. [N,N-bis(N',N'-Dimethylaminopropyl)aminomethyl]triorganylsilane of the general formula (4)
[(CH₃)₂N-CH₂-CH₂-CH₂]₂N-CH₂-Si(OR⁵)ₙ(CH₃)₃₋ₙ (4)
in which
**n** is an integer 1, 2 or 3 and
**R⁵** is the radical -CH₂-CH₃ or CH₃.

## Revendications

1. Procédé de préparation de (N-organylaminoorganyl)- et de (N,N-diorganylaminoorganyl)-triorganylsilanes de la formule générale (1)
R₃₋ₙR¹ₙSi-R²-NR³R⁴ (1)
par réaction d'amines cycliques ou acycliques de la formule générale (2)
H-NR³R⁴ (2)
dont la teneur en eau est de 0 à 20 000 ppm, avec des halogénoorganylsilanes de la formule générale (3)
R₃₋ₙR¹ₙSi-R²-X (3)
où
R représente un radical hydrocarboné ou alcoxy comportant de 1 à 10 atomes de C, et qui peut être saturé ou insaturé, ramifié ou non ramifié, substitué ou non substitué,
R¹ représente un radical hydrocarboné comportant de 1 à 10 atomes de C, et qui peut être saturé ou insaturé, ramifié ou non ramifié, substitué ou non substitué,
R² représente un radical hydrocarboné comportant de 1 à 10 atomes de C, et qui peut être saturé ou insaturé, ramifié ou non ramifié, substitué ou non substitué,
R³, R⁴ représentent de l'hydrogène ou un radical hydrocarboné comportant de 1 à 10 atomes de C, et qui peut être saturé ou insaturé, ramifié ou non ramifié, substitué ou non substitué, à la condition que R³, R⁴ puissent être identiques ou différents et le cas échéant liés entre eux, le noyau résultant pouvant aussi contenir des hétéroatomes,
X représente du chlore, du brome ou de l'iode,
n représente un nombre égal à 1, 2 ou 3,
**caractérisé en ce que** le procédé comprend les étapes suivantes :
a) addition en continu de l'(halogénoorganyl)silane de la formule générale (3) sur un laps de temps de 1 à maximum 3 heures, à une température de 80 à 200°C, à un excès triple à sextuple de l'amine de la formule générale (2), qui a été au préalable chargée dans l'espace de réaction et chauffée à la température de réaction,
d) élimination de l'amine en excès au terme de l'addition.

2. Procédé suivant la revendication 1, **caractérisé en ce que** le procédé comprend en outre, après l'étape d), l'étape suivante :
e) addition d'un solvant non polaire afin de précipiter des composés d'ammonium encore dissous, avec élimination subséquente des sels d'ammonium formés.

3. Procédé suivant la revendication 1 ou 2,
**caractérisé en ce que** le procédé comprend en outre, entre les étapes a) et d), les étapes suivantes:
b) Double décomposition des hydrohalogénures formés par introduction d'ammoniac pendant ou après l'addition de l'(halogénoorganyl) silane et
c) Séparation des sels d'ammonium formés au terme de l'addition.

4. Procédé suivant les revendications 1 à 3, **caractérisé en ce que** le procédé comprend, en tant qu'autre étape :
f) Une addition d'ammoniac afin de précipiter des hydrohalogénures encore dissous, avec élimination subséquente des sels d'ammonium formés.

5. Procédé suivant les revendications 1 à 4, **caractérisé en ce que** le procédé comprend, comme autre étape :
g) Une distillation du produit.

6. Procédé suivant les revendications 1 à 5, **caractérisé en ce que** la teneur en eau des amines de la formule générale (2) à mettre en oeuvre est de 0 à 20 000 ppm.

7. Procédé suivant les revendications 1 à 6, **caractérisé en ce que** la teneur en eau des amines de la formule générale (2) à mettre en oeuvre n'excède pas 1000 ppm.

8. Procédé suivant les revendications 2 à 7, **caractérisé en ce que**, dans l'étape d), on utilise des solvants organiques non polaires aisément recyclables.

9. Procédé suivant les revendications 1 à 8, **caractérisé en ce que** les radicaux R³ et R⁴ sont choisis indépendamment l'un de l'autre dans le groupe comprenant les radicaux cyclohexyle, phényle et l'hydrogène, ou sont liés directement ou par des hétéroatomes, de manière que, par intégration structurelle de l'atome de N, il se forme des structures cycliques -NR³R⁴.

10. Procédé suivant la revendication 9, **caractérisé en ce que** la structure cyclique -NR³R⁴ représente un radical morpholino, pipéridino ou pyrrolidino.

11. [N,N-bis-(N',N'-diméthylaminopropyl)aminométhyl]triorganylsilanes de la formule générale (4)
[(CH₃)₂N-CH₂-CH₂-CH₂]₂N-CH₂-Si(OR⁵)ₙ(CH₃)₃₋ₙ (4)
dans laquelle
n représente un nombre entier de 1, 2 ou 3 et
R⁵ représente le radical -CH₂-CH₃ ou - CH₃.
